# EUROPÄISCHE PATENTSCHRIFT

(11) **EP 0 362 518 B1**
(45) Veröffentlichungstag und Bekanntmachung des Hinweises auf die Patenterteilung: **29.12.1993**
(21) Anmeldenummer: 89114692.0
(22) Anmeldetag: 09.08.1989
(51) Int. Cl.: F16K 27/04, F16K 3/24, F16K 27/02

(54) **Kolbenventil mit flexibler Antriebseinrichtung**
Cylindrical slide valve with a flexible actuator
Tiroir cylindrique avec dispositif de commande flexible

(30) Priorität: 07.10.1988 DE 3834173
(43) Veröffentlichungstag der Anmeldung: 11.04.1990
(73) Patentinhaber: Johannes Erhard, H. Waldenmaier Erben Süddeutsche Armaturenfabrik GmbH & Co., D-89522 Heidenheim (DE)
(72) Erfinder: Rosenberg, Rupert, D-7920 Heidenheim (DE); Laub, Josef, D-7922 Herbrechtingen (DE); Götz, Ulrich, D-7920 Heidenheim (DE)

(56) Entgegenhaltungen:
- BE-A- 505 335
- DE-U- 8 807 860
- FR-A- 1 566 993
- GB-A- 2 043 216
- US-A- 3 648 718

## Beschreibung

Die Erfindung betrifft ein Ventil mit Gehäuse, Gehäusedeckel, Gehäusebuchse, Kolben und Kolbensitz, welches von einer Antriebseinrichtung betätigt wird, wobei Kolben und Gehäusebuchse einfachzylindriche Körper sind, welche im wesentlichen gleichbleibenden Durchmesser aufweisen und wobei die Gehäusebuchse einerseits im Kolbensitz zentriert ist.

Aus der FR-A-1 566 993 ist ein derartiges Ventil gemäß den Merkmalen im Oberbegriff von Anspruch 1 bekannt, bei dem die Gehäusebuchse mit ihrer Aussenseite direkt an der Innenwand des Gehäuses anliegt und dadurch zentriert wird. Dieses Ventil weist den Nachteil auf, daß sowohl die Aussenseite der Gehäusebuchse als auch die mit ihr in Kontakt stehende Innenseite des Ventilgehäuses sehr genau, quasi toleranzfrei bearbeitet sein müssen.

Ein ähnliches Ventil ist aus der DE-U-8 807 860 bekannt. Bei diesem Ventil sitzt die Gehäusebuchse etwa mittig im Gehäuse, jedoch direkt im Gehäuse eingepaßt, ohne zentrierenden Haltering. In der gesamten Beschreibung ist jedoch keinerlei Hinweis darauf zu finden, wie der Hohlzylinder im Gehäuse, und wie der Deckel auf dem Hohlzylinder angeordnet sind. Will man diesen Hohlzylinder im Gehäuse ohne einen Haltering im Gehäuse zentrieren, so ist eine äußerst genaue und damit äußerst aufwendige Bearbeitung der gesamten Verbindungsflächen von Gehäuse und Hohlzylinder erforderlich. Auf eine Zentrierung der Ventilbuchse im Gehäuse, oder auf die Anordnung eines Halterings zwischen Ventilbuchse und Gehäuse gibt diese Druckschrift keinen Hinweis.

Ähnliche Ventile sind auch aus der EP-A-227 854 bekannt. Nachteilig bei diesen Ventilen ist jedoch, daß sowohl der Kolben als auch die Gehäusebuchse Körper sind, welche durch mehrere, ineinander übergehende Zylinder verschiedener Durchmesser gebildet sind, was die Fertigung dieser Körper aufwendig und teuer macht. Bei den bekannten Ventilen wurden bisher mit solchen ineinander übergehenden Zylindern verschiedener Durchmesser die Differenzflächen gebildet, die den Differenzkolbeneffekt bewirken, welcher für vorgesteuerte Ventile erforderlich ist. Obwohl die Verwendung eines Kolbenrings, welcher im Bereich des unteren Endes des Kolbens zwischen Kolben und Gehäusebuchse angeordnet ist, bereits die zulässigen Bearbeitungstoleranzen von Kolben und Gehäusebuchse im Bereich eines Zylinderdurchmessers erhöht, ist es dennoch erforderlich im Bereich der übergänge sehr genau zu arbeiten. Ferner sind die Verbindungsstellen zwischen Gehäuse und Gehäusebuchse und zwischen Kolben und Kolbenstänge dieses bekannten Ventils so gebildet, daß ein exakter Zusammenbau und ein exaktes Arbeiten des zusammengesetzten Ventils nur dann gewährleistet ist, wenn an diesen Stellen ebenfalls präzise Passungen gearbeitet werden. Darüberhinaus erschwert eine derart aufwendige mehrfachzylindrische Formgebung der Teile die Handhabung des Ventils im Störungsfall. Auch bei Wartungsarbeiten, wenn zum Beispiel Verschleißteile wie Dichtungen ausgewechselt werden müssen, behindert eine solche mehrfachzylindrische Form die Auseinandernähme und den neuerlichen Zusammenbau des Ventils. Dies ist insbesondere deshalb störend, da Wartungs- und Reparaturarbeiten meist unter Zeitdruck und am eingebauten Ventil, also unter erschwerten Arbeitsbedingungen, stattfinden.

Darüberhinaus ist es unbefriedigend, daß bei den bekannten Ventilen, die einzelnen Bestandteile der Antriebseinrichtung bzw. die gesamte Antriebseinrichtung nicht in Ventile verschiedener Nennweiten eingebaut werden können. Für jede Nennweite ist der Bau einer eigenen Antriebseinrichtung mit unterschiedlichen Abmessungen erforderlich. So sind zum Beispiel beim Regelventil die Antriebsspindel, die Aufsatzsäule, der Antriebsflansch und Handrad oder Elektroantrieb oder beim Schwimmerventil die Kolbenstange, die Lagerung und das Schwimmergestänge oder bei anderen Ventilen die entsprechenden Teile der jeweiligen Antriebseinrichtungen nicht zwischen Ventilen verschiedener Nennweiten austauschbar. Auch hierdurch wird die Fertigung der Ventile aufwendig. Außerdem ist bei der Vielzahl der Nennweiten eine Lagerhaltung von vielen, zwischen Ventilen verschiedener Nennweiten nicht austauschbaren, Ersatzteilen unwirtschaftlich. Deshalb kann es zu erheblichen Verzögerungen des Ventilbetriebs kommen, wenn erst nach Auftreten von Störungen mit der Einzel-Neuanfertigung der Ersatzteile begonnen wird.

Aufgabe der vorliegenden Erfindung ist es, den Aufbau der Kolbenventile zu vereinfachen, insbesondere im Hinblick auf eine einfachere Fertigung und Handhabung bei Montage, Reparatur und Wartung.

Diese Aufgabe ist durch die Merkmale des Anspruchs 1 gelöst.

Die Erfindung weist den Vorteil auf, daß bei der Herstellung nunmehr größere Fertigungstoleranzen zulässig sind, welche durch den einfachen Haltering ohne weiteres ausgeglichen werden können.

Nach einer Weiterbildung der Erfindung weist der Kolben an seiner inneren Oberfläche einen kleinen bundartigen Vorsprung auf, der zur Verbindung des Kolbens mit der Kolbenstange dient. Ein solcher Bund ist sehr einfach herzustellen und ersetzt bisher verwendete aufwendiger zu bearbeitende Anschlußstellen für die Verbindung mit der Antriebsspindel bzw. Kolbenstange.

Eine weitere vorteilhafte Weiterbildung der Erfindung liegt darin, daß ein separates Verbindungsteil zur Verbindung von Kolben und Kolbenstange an dem bundartigen Vorsprung angeordnet ist. Auch kann das Verbindungssteil mit der Kolbenstange fest verbunden sein, während es um den bundartigen Vorsprung des Kolbens ein Spiel hat. Besonders vorteilhaft hierbei ist, daß einerseits so an dieser Stelle höhere Fertigungstoleranzen zulässig werden, auf der anderen Seite kann durch das Spiel ein Verklemmen oder Verkanten des Kolbens beim Hin- und Hergleiten vermieden werden. Dies gewährleistet eine präzise Führung des Kolbens.

Das Verbindungsteil kann aus zwei einfachen Scheiben bestehen, die sowohl bei der Herstellung als auch bei der Montage völlig unproblematisch sind.

Nach einer Weiterbildung der Erfindung weisen die Scheiben Druckausgleichsbohrungen auf, die jeweils in eine Nut münden. Dies hat den Vorteil, daß die Druckausgleichsbohrungen der aufeinanderliegenden Scheiben nicht fluchten müssen, was die Herstellung erleichtert.

Nach einer vorteilhaften Weiterbildung der Erfindung weist der jeweilige Deckel, dessen Größe entsprechend der Nennweite des Ventils verschieden groß sein kann, für Nennweiten von DN 50 bis DN 200 jeweils die gleich große zentrale Öffnung aufweisen. Dadurch ist es möglich, in Deckel von Ventilen verschiedener Nennweiten die identische Kolbenstange und Bundbuchse einzuführen. Die Kolbenstange und Bundbuchse sind somit zu einem zwischen verschiedenen Nennweiten austauschbaren Teil geworden. Auch kann der Deckel bei diesen Nennweiten an seiner Oberseite teilweise identisch ausgebildet sein. Dadurch ist es möglich, daß auf Ventile verschiedener Nennweiten außen auf die Deckel die identischen Antriebsteile aufgesetzt werden können. Somit sind auch die anderen Teile der Antriebseinrichtung, wie zum Beispiel Aufsatzsäule, Antriebsflansch und Antriebsvorrichtung beim Regelventil, bei verschiedenen Nennweiten austauschbar geworden. Auch diese Teile sind damit zu serienmäßig herstellbaren Teilen geworden. Die gesammte Antriebseinrichtung kann somit in einem Nennweitenbereich von DN 50 bis DN 200 eingesetzt werden. Dadurch wird die Herstellung der Ventile sowohl einfacher als auch billiger.

Das Ventil kann ein Regelventil sein. Nach einer Weiterbildung der Erfindung umfaßt das Regelventil eine Antriebseinrichtung, welche Antriebsspindel, Zeiger, Aufsatzsäule, Antriebsflansch und Antriebsvorrichtung aufweist, bei welcher auf den Antriebsflansch wahlweise verschiedene Antriebsvorrichtungen aufmontiert werden können. Die Antriebsvorrichtung kann ein Handrad, Kettenrad, Antriebshülse usw. oder auch ein Elektrodrehantrieb sein.

Das Ventil kann auch ein direkt gesteuertes Schwimmerventil sein. Die Kolbenstange des Schwimmerventils kann im Deckel zweifach gelagert sein. Die Lagerung für das Schwimmergestänge kann am Deckel angegossen sein. Dadurch wird eine extra Montage, zum Beispiel ein Anschrauben, einer separaten Lagerung am Deckel eingespart.

Nach einer Weiterbildung der Erfindung weist die Lagerung Anschlußteile für einen oder mehr Hebel auf. Das hat den Vorteil, daß an der Lagerung wahlweise entweder nur ein Hebel für eine Einfachführung oder mehr Hebel für eine parallelführung angebracht werden können, ohne daß es erforderlich wäre verschiedene Aufsätze aufzumontieren.

Jedes Ventil, gleichgültig ob Kolbenventil, Regelventil, Schwimmerventil oder ein anderes, kann bei Nennweiten von DN 50 bis 200 gleiche zentrale Deckelöffnungen und teilweise identisch gebildete Deckeloberseiten aufweisen. Damit ist es möglich geworden für Kolbenventile dieses Nennweitenbereiches die gleiche Antriebseinrichtung zu verwenden. Es ist somit erstmals wirtschaftlich die Teile der Antriebseinrichung serienmäßig herzustellen. Auch sind die Teile der Antriebseinrichtung nunmehr im Störfall leicht austauschbar, da sie von gleichen Ventilen anderer Nennweiten oder aus einem Lagerbestand entnommen werden können.

Das Ventil kann ein vorgesteuertes Druckminderventil oder ein vorgesteuertes Schwimmerventil sein.

Vorteilhafter Weise besteht der Kolben aus einem langen Kolbenteil und einer Kolbenscheibe, welche durch eine Kolbenstange miteinander verbunden sind. Das hat den Vorteil, daß zwischen den Kolbenteilen ein Zwischenboden angeordnet werden kann, welcher zur Herstellung des Differenzkolbeneffektes dient. So ist es möglich, ein Differenzkolbenventil herzustellen, bei welchem Kolben und Gehäusebuchse im wesentlichen gleichbleibende Durchmesser aufweisen. Eine Ausbildung von mehreren ineinander übergehenden Zylindern verschiedener Durchmesser an Kolben oder Gehäusebuchse ist damit nicht mehr nötig. Statt dessen werden die Differenzflächen durch bedeutend einfacher herstellbare und zu handhabendere separate Teile, die im Inneren des Kolbens angeordnet werden, erreicht. Ein solcher Zwischenboden kann zwischen der Gehäusebuchse und der Kolbenstange angeordnet sein.

Nach einer Weiterbildung der Erfindung kann die Gehäusebuchse auf ihrer inneren Oberfläche einen bundartigen Vorsprung oder eine nutartige Ausnehmung aufweisen, an welcher der Zwischenboden angeordnet wird. Eine derartige Verbindung ist einfach herstellbar und leicht zu handhaben.

Auch kann der Zwischenboden zwei Scheiben mit Durchgang für die Kolbenstange aufweisen, deren untere Scheibe um den Durchgang für die Kolbenstange einen halsförmigen Ansatz aufweist, zur Zentrierung einer Feder.

Um ein verkantungsfreies Gleiten der Kolbenscheibe zu gewährleisten, kann diese an ihrer Lauffläche entlang der Gehäusebuchse eine kurze und an ihren oberen und unteren Laufflächenenden abgerundete Form aufweisen.

Auch kann die Kolbenscheibe an ihre Unterseite zum Kolben hin eine Andrehung haben, damit die Steuerbohrung in der Gehäusebuchse nicht überfahren werden kann.

Nach einer Weiterbildung der Erfindung weist die Kolbenstange eine Bohrung auf, welche den Raum über dem langen Kolbenteil und den Raum über der Kolbenscheibe miteinander verbindet. Dadurch entsteht in beiden Räumen der gleiche Druck.

Nach einer Weiterbildung der Erfindung ist in einer Ausnehmung zwischen den beiden Scheiben des Zwischenbodens ein Kolbenring angeordnet, welcher in radialer Richtung ein Spiel hat. Dadurch wird eine ausreichende Abdichtung und eine automatische Ent- und Belüftung bewirkt.

Auch kann im Bereich des unteren Endes des Kolbens zwischen Kolben und Gehäusebuchse ein Kolbenring angeordnet sein.

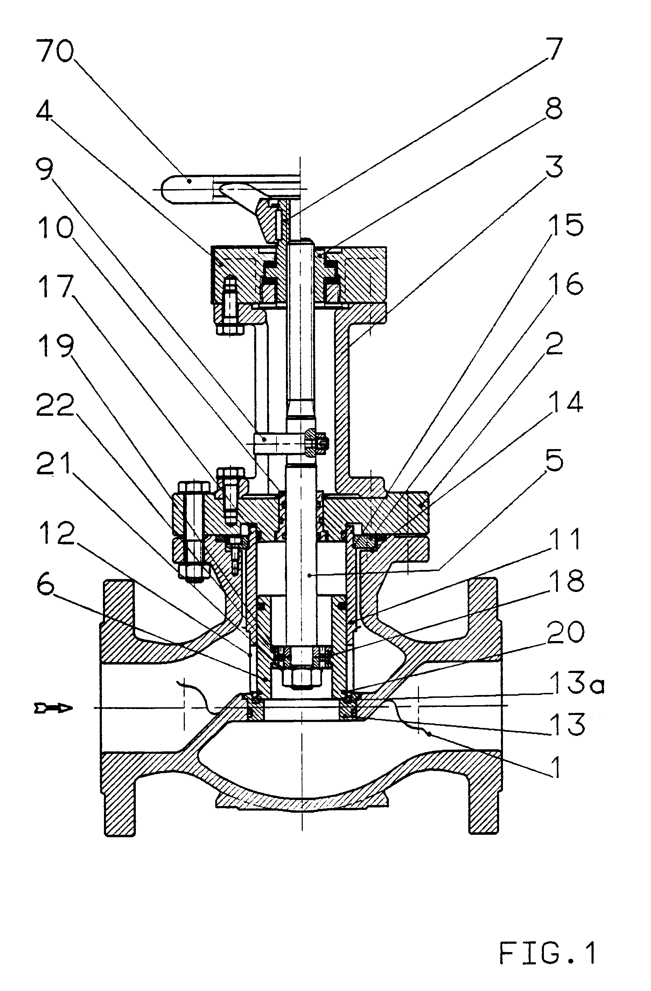

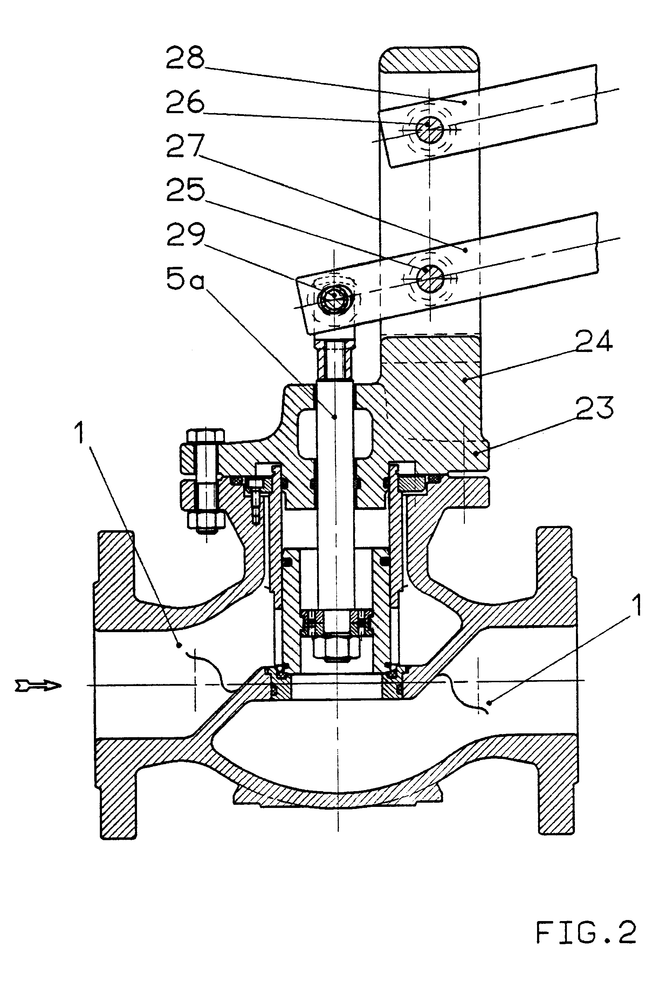

Ausführungsbeispiele der Erfindung werden im folgenden in den Figuren 1 und 2 dargestellt, von denen
- Figur 1: einen Schnitt durch ein Regelventil im geschlossen Zustand, und
- Figur 2: ein direkt gesteuertes Schwimmerventil im Schnitt darstellt.
- Figur 3: zeigt einen Schnitt eines vorgesteuerten Druckminderventils oder Schwimmerventils mit einigen aber nicht sämtlichen erfindungswesentlichen Merkmalen.

In Figur 1 ist ein Regelventil dargestellt mit einem Gehäuse 1, welches oben von einem Deckel 2 verschlossen ist. Auf der Oberseite des Deckels ist eine Aufsatzsäule 3 angeordnet, auf welche ein Antriebsflansch 4 aufmontiert ist. Eine Antriebsspindel 5 durchguert axial den Antriebsflansch, die Aufsatzsäule und den Deckel bis ins Innere des Kolbens 6. Das obere Ende der Antriebsspindel 5 befindet sich im Inneren einer Gewindebuchse. Nach einer Ausführungsform ist eine Gewindebuchse 8 im Inneren des Antriebsflansches angeordnet. Auf dem Antriebsflansch 4 mit der Gewindebuchse 8 ist ein Elektrodrehantrieb anbringbar. Nach einer anderen Ausführungsform ist eine Gewindebuchse 7 teilweise im Inneren des Antriebsflansches angeordnet. Auf der Gewindebuchse 7 ist ein Handrad oder dgl. zur Betätigung des Ventils anbringbar. Im Bereich der Aufsatzsäule 3 ist an der Antriebsspindel 5 ein Zeiger 9 zur Anzeige der Ventilstellung vorgesehen, der gleichzeitig eine Drehung der Antriebsspindel verhindert. Die Antriebsspindel 5 wird im Deckel 2 von einer Bundbuchse 10 und mehreren darin befindlichen Dichtungen abgedichtet.

Im Inneren des Gehäuses 1 befindet sich eine Gehäusebuchse 11, welche an ihrem unteren Ende auf einem Kolbensitz bzw. Sitzring 13 zentriert ist und aufsitzt. Die Gehäusebuchse 11 ist als Schlitzzylinder ausgebildet, dessen Schlitze 12 im unteren Bereich der Gehäusebuchse 11 angeordnet sind. Im Bereich des oberen Gehäuserandes befindet sich auf der Außenseite der Gehäusebuchse eine Abstufung 15, auf welcher ein Haltering 16 angeordnet ist, der mit dem Gehäuse verschraubt ist. Das obere Ende der Gehäusebuchse greift in eine auf der Unterseite des Gehäusedeckels verlaufende Nut 17. Im Inneren der Gehäusebuchse befindet sich der Kolben 6, welcher auf seiner inneren Oberfläche einen bundartigen Vorsprung 18 aufweist. Kolben 6 und Antriebsspindel 5 sind mittels zweier Scheiben 19 miteinander verbunden. Gemäß einer Ausführungsform kann im Bereich des unteren Endes des Kolbens ein Kolbenring 20 angeordnet sein, der zusammen mit der als Schlitzzylinder ausgebildeten Gehäusebuchse 11 eine Regeleinrichtung bildet, die gewährleistet, daß bei geringem öffnungsgrad sich die freiwerdende Querschnittsfläche nur langsam und vor allem stetig verändert.

Im unteren Teil der Figur 1 ist deutlich zu sehen, daß Kolben und Gehäusebuchse mit im wesentlichen gleichbleibenden Durchmessern gebildet sind. Die einzige Abweichung von dieser zylindrischen Formgebung bilden kleine stufenartige Vorsprünge 18 bzw. Ausnehmungen 15 im Inneren des Kolbens bzw. außen an der Gehäusebuchse, die der Verbindung mit den anderen Ventilbestandteilen dienen. Der Außendurchmesser des Kolbens und der Innendurchmesser der Gehäusebuchse sind auf ihrer ganzen Länge konstant. Wenn sich der Kolben 6 in seiner Schließstellung befindet, wird das Ventil von einem Dichtring 13a abgedichtet, der in einer Kammer sitzt, die von Sitzring 13 und Gehäusebuchse 11 gebildet ist. Wird der Kolben nach oben bewegt, so gewährleistet die Regeleinrichtung 11, 20, daß die freiwerdende Querschnittsfläche, durch welche das Strömungsmedium fließen kann, langsam und stetig zunehmend freigegeben wird. Die Verbindungsscheiben 19 zwischen Antriebsspindel 5 und Kolben 6 sind mit der Antriebsspindel fest verbunden, während sie an ihrer Verbindungsstelle zum Kolben hin um den bundartigen Vorsprung 18 ein Spiel aufweisen. Dadurch wird gewährleistet, daß sich der Kolben während der Aufwärts- bzw. Abwärtsführung durch die Kolbenstange nicht verklemmt, da kleine Abweichungen von der exakten Führungsbahn von diesem Spiel ausgeglichen werden können. Die Scheiben 19 zur Verbindung von Antriebsspindel und Kolben weisen Druckentlastungsbohrungen 21 auf. Diese verhindern, daß sich durch die Auf- und Abwärtsbewegung des Kolbens in seinem Inneren ein Druck aufbaut, der zu einem Blockieren des Kolbens führen kann. Die Druckentlastungsbohrungen 21 münden in eine Nut 22, so daß die Druckentlastung im Kolben wirksam ist, auch ohne daß die Druckentlastungsbohrungen fluchten müssen. Der Haltering 16, welcher die Gehäusebuchse im Gehäuse hält, zwingt diese in einen umlaufend gleichmäßigen Abstand zum Gehäuse und wirkt somit zentrierend. Das obere Ende der Gehäusebuchse greift in eine an der Unterseite des Deckels 2 befindliche Nut 17 ein und zentriert so den Deckel auf dem Gehäuse.

Im oberen Teil der Figur 1 ist die Antriebseinrichtung zu sehen, bestehend aus Antriebsspindel 5, Zeiger 9, Aufsatzsäule 3, Antriebsflansch 4 und Handrad 70 mit entsprechender Gewindebuchse 7. Die zentrale öffnung im Deckel ist bei allen Ventilen bei Nennweiten zwischen DN 50 und DN 200 gleich groß, so daß die gleichen Antriebsspindeln 5 und Bundbuchsen 10 bei diesen Nennweiten verwendbar sind. Außerdem ist der Deckel auf einem Teil seiner Oberseite um die öffnung herum bei allen Ventilen der Nennweiten DN 50 bis DN 200 gleich ausgebildet, um zu ermöglichen, daß bei diesen Nennweiten die gleiche Aufsatzsäule oder andere Bestandteile der Antriebseinrichtung aufgesetzt werden können. Je nach Bedarf kann in den Antriebsflansch 4 eine lange Gewindebuchse 7 oder eine kurze Gewindebuchse 8 eingesetzt werden, um wahlweise ein Handrad oder einen Elektrodrehantrieb aufzunehmen.

In Figur 2 ist ein direkt gesteuertes Schwimmerventil dargestellt, welches eine andere Ausführungsform einer Antriebseinrichtung zeigt, die bei Nennweiten von DN 50 bis DN 200 eingesetzt werden kann. Auch bei dieser Ausführungsform weist der Deckel bei Nennweiten von DN 50 bis DN 200 die gleiche zentrale Öffnung auf und ist auf seiner Oberseite teilweise gleich ausgebildet. Die Antriebseinrichtung weist Kolbenstange, Lagerung für das Schwimmergestänge und Gestängehebel auf. Im Ventildeckel 23 ist die Kolbenstange zweifach gelagert, um eine stabile Führung zu gewährleisten. Der Deckel 23 weist auf seiner rechten Seite eine Lagerung 24 für das Schwimmergestänge 27, 28 auf, welches bei den oben genannten Nennweiten gleich ausgebildet ist. Diese Lagerung 24 ist am Deckel 23 angegossen und muß daher nicht extra montiert werden. Auf der Lagerung 24 befinden sich zwei übereinander angeordnete Anschlußstellen 25, 26. Wie man sieht können wahlweise ein oder zwei Gestängehebel 27, 28 angebracht werden, ohne daß ein separater Anschluß für den zweiten Hebel anmontiert werden muß. Im übrigen weist dieses Ventil im Inneren des Gehäuses den gleichen Aufbau mit einfachzylindrischem Kolben und Gehäusebuchse auf wie das Ventil gemäß Figur 1.

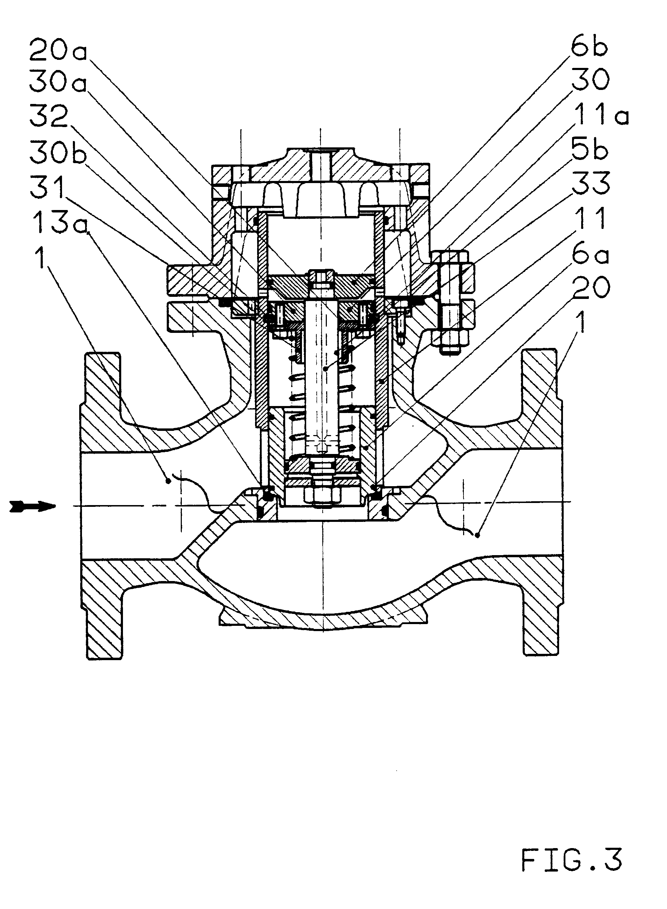

Figur 3 zeigt ein vorgesteuertes Druckminder- oder Schwimmerventil. Die bei den vorgesteuerten Ventilen erforderliche Betätigungskraft wurde bisher mit mehrfachzylindrischen abgestuften Buchsen und Kolben erreicht, bei denen die ineinander übergehenden Zylinder verschiedener Durchmesser die Differenzflächen bilden, die den Differenzkolbeneffekt bewirken. Bei der Ausführungsform gemäß Figur 3 wird der Differenzkolbeneffekt auf verblüffend einfache Weise anders verwirklicht, während Kolben und Gehäusebuchse einfachzylindrische Körper sind. Im Inneren der Gehäusebuchse befindet sich ein zweiteiliger Kolben, bestehend aus einem langen Kolbenteil 6a und einer Kolbenscheibe 6b, welche durch die Kolbenstange 5b miteinander verbunden sind. Zwischen den beiden Kolbenteilen befindet sich ein Zwischenboden 30. Durch einen mehrteiligen Ring 32, welcher teilweise innerhalb einer nutartigen Ausnehmung 11a in der Gehäusebuchse 11 sitzt, wird der Zwischenboden in der Gehäusebuchse befestigt. Der Zwischenboden besteht aus zwei Scheiben 30a, 30b, deren untere Scheibe 30b um den Durchgang für die Kolbenstange einen halsförmigen Ansatz 31 für die Zentrierung der Feder aufweist. An ihrer Unterseite hat die Kolbenscheibe 6b zur Kolbenstange hin eine Andrehung, damit die Steuerbohrung in der Gehäusebuchse nicht überfahren werden kann. Zwischenboden 30a, 30b und Kolbenscheibe 6b bilden Differenzflächen, die zur Erzeugung des Differenzkolbeneffektes erforderlich sind. Auf diese Weise ist es möglich, die einfachen zylindrisch geformten Kolben und Gehäusebuchse mit ihren gleichbleibenden Durchmessern auch beim vorgesteuerten Ventil zu verwenden. Die Kolbenscheibe 6b ist an ihrer Lauffläche entlang der inneren Oberfläche der Gehäusebuchse kurz ausgeführt und am oberen und unteren Laufflächenende jeweils abgerundet, um ein Verklemmen oder Verkanten zu vermeiden. In der Kolbenstange 5 befindet sich eine axiale Bohrung 33, welche den Raum über dem langen Kolbenteil und den Raum über der Kolbenscheibe druckausgleichend miteinander verbindet. In einer nutartigen Ausnehmung in der Kolbenscheibe 6b ist zwischen den beiden Scheiben des Zwischenbodens ein Kolbenring 20a angeordnet. Dieser Kolbenring 20a hat in radialer Richtung ein Spiel, welches eine automatische Entlüftung bewirkt.

Die beschriebene Erfindung ist selbstverständlich bei allen Arten von Kolbenventilen anwendbar, so zum Beispiel auch bei Überströmventilen und Sicherheitsventilen.

## Patentansprüche

1. Ventil mit Gehäuse (1), Gehäusedeckel (2,23) Gehäusebuchse (11), Kolben (6) und Sitzring (13), welches von einer Antriebseinrichtung (5, 3, 4; 7, 8, 9) betätigt wird, wobei Kolben (6) und Gehäusebuchse (11) einfachzylindrische Körper sind, welche im wesentlichen gleichbleibende Durchmesser aufweisen und wobei die Gehäusebuchse (11) einerseits im Sitzring (13) zentriert ist, dadurch gekennzeichnet, daß die Gehäusebuchse (11) andererseits im Gehäuse (1) mit Abstand von diesem durch einen Haltering (16) befestigt und zentriert ist, und daß der Deckel (2,23) auf dem Gehäuse (1) durch die Innenfläche des oberen Teils der Gehäusebuchse (11) zentriert ist.

2. Ventil nach Anspruch 1, dadurch gekennzeichnet, daß der Deckel (2,23) auf seiner Unterseite eine Ausnehmung (17) aufweist, in welche der obere Rand der Gehäusebuchse (11) eingreift.

3. Ventil nach einem der vorhergehenden Ansprüche, dadurch gekennzeichnet, daß der Kolben (6) auf seiner inneren Oberfläche einen bundartigen Vorsprung (18) oder eine Nut aufweist.

4. Ventil nach einem der vorhergehenden Ansprüche, dadurch gekennzeichnet, daß Kolben (6) und Antriebsspindel (5) der Antriebseinrichtung (5, 3, 4; 7, 8, 9) mittels eines separaten Verbindungsteils (19) verbunden sind, welches an dem bundartigen Vorsprung (18) angeordnet ist.

5. Ventil nach Anspruch 4, dadurch gekennzeichnet, daß das Verbindungsteil (19) mit der Antriebsspindel (5) fest verbunden ist, und um den bundartigen Vorsprung (18) ein Spiel hat.

6. Ventil nach Anspruch 4 oder 5, dadurch gekennzeichnet, daß das Verbindungsteil (19) aus zwei Scheiben besteht.

7. Ventil nach Anspruch 6, dadurch gekennzeichnet, daß die Scheiben (19) Druckausgleichsbohrungen (21) aufweisen, die in eine Nut (22) münden.

8. Ventil nach einem der vorhergehenden Ansprüche, dadurch gekennzeichnet, daß die Gehäusebuchse (11) und der Sitzring (13) eine Kammer bilden, in welche eine Dichtung (13a) eingelegt werden kann.

9. Ventil nach einem der vorhergehenden Ansprüche, dadurch gekennzeichnet, daß der jeweilige Deckel (2), dessen Größe entsprechend der Nennweite des Ventils verschieden groß sein kann, für Nennweiten von DN 50 bis DN 200 jeweils die gleich große zentrale Öffnung aufweist.

10. Ventil nach Anspruch 9, dadurch gekennzeichnet, daß die gleiche Antriebsspindel (Kolbenstange 5,5a) bei Ventilen mit einer Nennweite zwischen von DN 50 bis DN 200 einsetzbar ist.

11. Ventil nach Anspruch 9, dadurch gekennzeichnet, daß die gleiche Antriebseinrichtung (5, 3, 4; 7, 8, 9) bei Nennweiten von DN 50 bis DN 200 einsetzbar ist.

12. Ventil nach einem der vorhergehenden Ansprüche, dadurch gekennzeichnet, daß es ein Regelventil ist.

13. Ventil nach Anspruch 12, mit einer Antriebseinrichtung, welche Antriebsspindel (5), Zeiger (9), Aufsatzsäule (3), Antriebsflansch (4) und Antriebsvorrichtung (70) aufweist, dadurch gekennzeichnet, daß auf den Antriebsflansch (4) wahlweise verschiedene Antriebsvorrichtungen (70) aufmontierbar sind.

14. Ventil nach Anspruch 13, dadurch gekennzeichnet, daß die Antriebsvorrichtung (70) ein Handrad, Kettenrad, Antriebshülse usw. oder ein Elektrodrehantrieb ist.

15. Ventil nach einem der Ansprüche 1 bis 10, dadurch gekennzeichnet, daß es ein direkt gesteuertes Schwimmerventil ist.

16. Ventil nach Anspruch 14, dadurch gekennzeichnet, daß die Antriebsspindel (Kolbenstange 5a) im Deckel (23) zweifach gelagert ist.

17. Ventil nach Anspruch 15, dadurch gekennzeichnet, daß die Lagerung (24) für das Schwimmergestänge am Deckel (23) angegossen ist.

18. Ventil nach Anspruch 17, dadurch gekennzeichnet, daß die Lagerung (24) Anschlüsse (25, 26) für einen oder mehr Hebel (27, 28) aufweist.

19. Ventil nach Anspruch 18, dadurch gekennzeichnet, daß im Hebel (27) ein Langloch (29) angebracht ist.

20. Ventil nach einem der Ansprüche 1 bis 4 und 6 bis 8, dadurch gekennzeichnet, daß es ein vorgesteuertes Druckminderventil oder ein vorgesteuertes Schwimmerventil ist.

21. Ventil nach Anspruch 20, dadurch gekennzeichnet, daß der Kolben aus einem langen Kolbenteil (6a) und einer Kolbenscheibe (6b) besteht, welche durch eine Kolbenstange (5b) miteinander verbunden sind.

22. Ventil nach Anspruch 21, dadurch gekennzeichnet, daß zwischen der Gehäusebuchse (11) und der Kolbenstange (5b) und zwischen dem langen Kolbenteil (6a) und der Kolbenscheibe (6b) ein Zwischenboden (30a, 30b) angeordnet ist.

23. Ventil nach Anspruch 22, dadurch gekennzeichnet, daß der Zwischenboden (30a, 30b) an einem bundartigen Vorsprung oder einer nutartigen Ausnehmung (11a) an der inneren Oberfläche der Gehäusebuchse (11) angeordnet ist.

24. Ventil nach Anspruch 22 oder 23, dadurch gekennzeichnet, daß der Zwischenboden zwei Scheiben (30a, 30b) mit Durchgang für die Kolbenstange (5b) aufweist, deren untere Scheibe um den Durchgang für die Kolbenstange (5b) einen halsförmigen Ansatz (31) für die Zentrierung einer Feder aufweist.

25. Ventil nach einem der Ansprüche 22 bis 24, dadurch gekennzeichnet, daß die Kolbenscheibe (6b) an ihrer Lauffläche entlang der Gehäusebuchse (11) kurz und an ihren oberen und unteren Laufflächenenden abgerundet ausgebildet ist.

26. Ventil nach einem der Ansprüche 22 bis 25, dadurch gekennzeichnet, daß die Kolbenscheibe (6b) an ihrer Unterseite zum Kolbenteil (6a) hin eine Andrehung besitzt.

27. Ventil nach einem der Ansprüche 22 bis 26, dadurch gekennzeichnet, daß die Kolbenstange (5b) eine Bohrung (33) aufweist, welche den Raum über dem langen Kolbenteil (6a) und den Raum über der Kolbenscheibe (6b) miteinander verbindet.

28. Ventil nach einem der Ansprüche 24 bis 27, dadurch gekennzeichnet, daß in einer Ausnehmung in den Scheiben (30a, 30b) ein Kolbenring (20a) zur Kolbenstangenabdichtung angeordnet ist, welcher in radialer Richtung ein Spiel hat.

29. Ventil nach einem der Ansprüche 22 bis 28, dadurch gekennzeichnet, daß im Bereich des unteren Endes des Kolbens (6a) zwischen Kolben und Gehäusebuchse (11) ein Kolbenring (20) angeordnet ist.

## Claims

1. Valve comprising a housing (1), housing cover (2, 23), housing bush (11), piston (6) and seat ring (13), which is actuated by an actuator (5, 3, 4; 7, 8, 9), the piston (6) and housing bush (11) being single cylindrical bodies which have substantially constant diameters and the housing bush (11) being centred on the one side in the seat ring (13), characterized in that the housing bush (11) is secured and centred on the other side in the housing (1) spaced from the latter by a holding ring (16), and that the cover (2, 23) is centred on the housing (1) by the inner surface of the upper portion of the housing bush (11).

2. Valve according to claim 1, characterized in that the cover (2, 23) comprises on its lower side a recess (17) into which the upper edge of the housing bush (11) engages.

3. Valve according to any one of the preceding claims, characterized in that the piston (6) comprises a collar-like projection (18) or a groove at its upper inner surface.

4. Valve according to any one of the preceding claims, characterized in that the piston (6) and drive spindle (5) of the actuator (5, 3, 4; 7, 8, 9) are connected by means of a separate connecting member (19) which is arranged at the collar-like projection (18).

5. Valve according to claim 4, characterized in that the connecting member (19) is fixedly connected to the drive spindle (5) and has a play around the collar-like projection (18).

6. Valve according to claim 4 or 5, characterized in that the connecting member (19) consists of two discs.

7. Valve according to claim 6, characterized in that the discs (19) have pressure-compensating bores (21) opening into a groove (22).

8. Valve according to any one of the preceding claims, characterized in that the housing bush (11) and the seat ring (13) form a chamber into which a seal (13a) can be inserted.

9. Valve according to any one of the preceding claims, characterized in that the respective cover (2), the size of which may be different corresponding to the nominal width of the valve, has the same size central opening for nominal widths from DN 50 to DN 200.

10. Valve according to claim 9, characterized in that the same drive spindle (piston rod 5, 5a) can be used in valves having a nominal width between DN 50 to DN 200.

11. Valve according to claim 9, characterized in that the same actuator (5, 3, 4; 7, 8, 9) can be used for nominal widths of DN 50 to DN 200.

12. Valve according to any one of the preceding claims, characterized in that it is a control valve.

13. Valve according to claim 12 comprising an actuator having a drive spindle (5), pointer (9), yoke column (3), drive flange (4) and drive means (70), characterized in that various drive means (70) can be optionally mounted on the drive flange (4).

14. Valve according to claim 13, characterized in that the drive means (70) is a handwheel, sprocket, drive sleeve, etc., or an electric rotary drive.

15. Valve according to any one of claims 1 to 10, characterized in that it is a directly controlled float valve.

16. Valve according to claim 14, characterized in that the drive spindle (piston rod 5a) is mounted twice in the cover (23).

17. Valve according to claim 15, characterized in that the mounting (24) for the valve linkage is integrally cast on the cover (23).

18. Valve according to claim 17, characterized in that the mounting (24) comprises connections (25, 26) for one or more levers (27, 28).

19. Valve according to claim 18, characterized in that a slot (19) is formed in the lever (27).

20. Valve according to any one of claims 1 to 4 and 6 to 8, characterized in that it is a pilot-controlled pressure-reducing valve or a pilot-controlled float valve.

21. Valve according to claim 20, characterized in that the piston consists of a long piston part (6a) and a piston disc (6b) which are connected together by a piston rod (5b).

22. Valve according to claim 21, characterized in that between the housing bush (11) and the piston rod (5b) and between the long piston part (6a) and the piston disc (6b) an intermediate bottom (30a, 30b) is arranged.

23. Valve according to claim 22, characterized in that the intermediate bottom (30a, 30b) is arranged on a collar-like projection or a groove-like recess (11a) at the inner surface of the housing bush (11).

24. Valve according to claim 22 or 23, characterized in that the intermediate bottom comprises two discs (30a, 30b) with a passage for the piston rod (5b), the lower disc of which comprises round the passage for the piston rod (5b) a neck-like extension (31) for centering a spring.

25. Valve according to any one of claims 22 to 24, characterized in that the piston disc (6b) is made short at its running surface along the housing bush (11) and is rounded at its upper and lower running surface ends.

26. Valve according to any one of claims 22 to 25, characterized in that the piston disc (6b) comprises a turning at its lower side towards the piston part (6a).

27. Valve according to any one of claims 22 to 26, characterized in that the piston rod (5b) comprises a bore (33) which connects together the space above the long piston part (6a) and the space above the piston disc (6b).

28. Valve according to any one of claims 24 to 27, characterized in that in a recess in the discs (30a, 30b) a piston ring (28) is arranged for the piston ring sealing and has a clearance in the radial direction.

29. Valve according to any one of claims 22 to 28, characterized in that in the region of the lower end of the piston (6a) a piston ring (20) is arranged between the piston and housing bush (11).

## Revendications

1. Robinet comprenant un corps (1), un couvercle (2, 23) et un manchon intérieur (11) conjugés au corps, un piston (6) et une bague formant siège (13), qui est manoeuvré par un dispositif de commande (5, 3, 4; 7, 8, 9), dans lequel le piston (6) et le manchon (11) sont des pièces de forme cylindrique simple ayant un diamètre essentiellement constant et dans lequel le manchon (11) est centré d'un côté dans la bague formant siège (13), caractérisé en ce que le manchon (11) est fixé et centré de l'autre côté dans le corps (1), à distance de celui-ci, par une bague de maintien (16), et que le couvercle (2, 23) est centré sur le corps (1) par la surface intérieure de la partie supérieure du manchon (11).

2. Robinet selon la revendication 1, caractérisé en ce que le dessous du couvercle (2, 23) présente un évidement (17) dans lequel pénètre le bord supérieur du manchon (11).

3. Robinet selon une des revendications précédentes, caractérisé en ce que la surface intérieure du piston (6) présente une saillie (18) semblable à un collet ou une gorge.

4. Robinet selon une des revendications précédentes, caractérisé en ce que le piston (6) et la tige filetée de commande (5) du dispositif de commande (5, 3, 4; 7, 8, 9) sont reliés entre eux au moyen d'une pièce de liaison séparée (19) disposée sur la saillie (18) semblable à un collet.

5. Robinet selon la revendication 4, caractérisé en ce que la pièce de liaison (19) est reliée fixe à la tige filetée de commande (5) et présente du jeu autour de la saillie (18) semblable à un collet.

6. Robinet selon la revendication 4 ou 5, caractérisé en ce que la pièce de liaison (19) est constituée de deux disques.

7. Robinet selon la revendication 6, caractérisé en ce que les disques (19) présentent des orifices d'égalisation de pression (21) qui débouchent dans une gorge (22).

8. Robinet selon une des revendications précédentes, caractérisé en ce que le manchon (11) et la bague formant siège (13) définissent un logement dans lequel peut être placé un joint d'étanchéité (13a).

9. Robinet selon une des revendications précédentes, caractérisé en ce que le couvercle (2), pouvant avoir une grandeur variable en fonction du diamètre nomibal du robinet, présente une ouverte centrale de même grandeur pour des robinets de diamètres nominaux allant de DN 50 à DN 200.

10. Robinet selon la revendication 9, caractérisé en ce que la même tige filetée de commande (tige de piston 5, 5a) est utilisable sur des robinets dont le diamètre nominal est compris entre DN 50 et DN 200.

11. Robinet selon la revendication 9, caractérisé en ce que le même dispositif de commande (5, 3, 4; 7, 8, 9) est utilisable sur des robinets dont les diamètres nominaux sont compris entre DN 50 et DN 200.

12. Robinet selon une des revendications précédentes, caractérisé en ce qu'il est un robinet de réglage.

13. Robinet selon la revendication 12 avec un dispositif de commande comprenant une tige filetée de commande (5), un index (9), un chapeau en colonne (3), une bride de commande (4) et un système de commande (70), caractérisé en ce que différents systèmes de commande (70) peuvent être montés au choix sur la bride de commande (4).

14. Robinet selon la revendication 13, caractérisé en ce que le système de commande (70) est un volant actionné manuellement, une roue à chaîne, une douille de commande et ainsi de suite ou une commande électrique à rotation.

15. Robinet selon une des revendications 1 à 10, caractérisé en ce qu'il est un robinet à flotteur à commande directe.

16. Robinet selon la revendication 14, caractérisé en ce que la tige filetée de commande (tige de piston 5a) est montée à double palier dans le couvercle (23).

17. Robinet selon la revendication 15, caractérisé en ce que le support (24) pour la timonerie du flotteur est formé sur le couvercle (23) lors de la coulée de celui-ci.

18. Robinet selon la revendication 17, caractérisé en ce que le support (24) présente des raccordements (25, 26) pour un ou plusieurs leviers (27, 28).

19. Robinet selon la revendication 18, caractérisé en ce qu'un trou oblong (29) est ménagé dans le levier (27).

20. Robinet selon une des revendications 1 à 4 et 6 à 8, caractérisé en ce qu'il est un manodétendeur piloté ou un robinet à flotteur piloté.

21. Robinet selon la revendication 20, caractérisé en ce que le piston est constitué d'une longue partie de piston (6a) et d'un disque (6b) qui sont reliés entre eux par une tige de piston (5b).

22. Robinet selon la revendication 21, caractérisé en ce qu'un fond intermédiaire (30a, 30b) est disposé entre le manchon (11) et la tige de piston (5b) et entre la longue partie de piston (6a) et le disque (6b) du piston.

23. Robinet selon la revendication 22, caractérisé en ce que le fond intermédiaire (30a, 30b) est disposé sur une saillie semblabe à un collet ou dans un évidement (11a) semblable à une gorge de la surface intérieure du manchon (11).

24. Robinet selon la revendication 22 ou 23, caractérisé en ce que le fond intermédiaire comporte deux disques (30a, 30b) pourvus d'un passage pour la tige de piston (5b) et dont le disque inférieur présente, autour du passage pour la tige de piston (5b), un prolongement (31) en forme de col pour le centrage d'un ressort.

25. Robinet selon une des revendications 22 à 24, caractérisé en ce que le disque (6b) du piston possède une portée s'étendant sur une courte longueur le long du manchon (11) et ayant des extrémités supérieure et inférieure arrondies.

26. Robinet selon une des revendications 22 à 25, caractérisé en ce que le disque (6b) du piston possède sur son dessous une configuration façonnée au tour dirigée vers la longue partie de piston (6a).

27. Robinet selon une des revendications 22 à 26, caractérisé en ce que la tige de piston (5b) présente un perçage (33) qui fait communiquer entre eux l'espace au-dessus de la longue partie de piston (6a) et l'espace au-dessus du disque (6b) du piston.

28. Robinet selon une des revendications 24 à 27, caractérisé en ce qu'un segment de piston (20a), servant à étancher la tige de piston, est disposé avec du jeu en direction radiale dans un évidement des disques (30a, 30b) du fond intermédiaire.

29. Robinet selon une des revendications 22 à 28, caractérisé en ce qu'un segment de piston (20) est disposé dans la région de l'extrémité inférieure du piston (6a) entre celui-ci et le manchon (11).
